# EUROPEAN PATENT SPECIFICATION

(11) **EP 3 097 015 B1**
(45) Date of publication and mention of the grant of the patent: **11.08.2021**
(21) Application number: 15702596.6
(22) Date of filing: 20.01.2015
(51) Int. Cl.: B64D 11/00, F25D 3/12

(54) **A GALLEY CONTAINER AND A COOLING ELEMENT TO COOL THE INTERIOR OF THE GALLEY CONTAINER**
BORDKÜCHENBEHÄLTER UND KÜHLELEMENT ZUM KÜHLEN DES INNEREN DES BORDKÜCHENBEHÄLTERS
UN CONTENEUR DE CUISINE ET UN ÉLÉMENT DE REFROIDISSEMENT POUR REFROIDIR L'INTÉRIEUR DU CONTENEUR DE CUISINE

(30) Priority: 20.01.2014 NL 2012113; 22.09.2014 NL 2013506
(43) Date of publication of application: 30.11.2016
(73) Proprietor: Safran Cabin Catering B.V., 1812 RL Alkmaar (NL)
(72) Inventor: KRAMER, Marco Gerardus Bernardus, 1816 DB Alkmaar (NL); GIRARD, Adrien Eric Martin Bernard, 1054 WD Amsterdam (NL); VERWEIJ, Ronald, 3823 JA Amersfoort (NL)
(74) Representative: Gevers Patents
(86) International application number: PCT/NL2015/050035
(87) International publication number: WO 2015/108422

(56) References cited:
- EP-A1- 2 336 684
- WO-A1-2006/093410
- WO-A1-2012/056086
- WO-A1-2013/024448
- FR-A1- 2 561 509
- US-A- 2 123 678
- US-A1- 2011 248 458
- None

## Description

### Field of the invention

The invention relates to a galley container, in particular a galley container for an aircraft. Additionally, the invention relates to a cooling element to cool the interior of the galley container. Furthermore, the invention relates to an assembly of such a galley container and such a cooling element.

### Background of the invention

During short or long journeys in a vehicle, in particular an aircraft, passengers are usually provided with at least a beverage or a snack. For this purpose, food products are carried on board of the vehicle, for example an airplane, in galley containers that can be stored in the onboard galleys. The galley container can be a galley trolley provided with wheels for transportation. To be servable, food products should be kept at a temperature less than 8°C, preferably below 5°C, until they are served, to prevent spoilage. In case the temperature of the food is at a temperature above 8°C, the food will have to be distributed within a very short time period to be able to keep up with health regulations.

Keeping food at a temperature at 8°C, preferably below 5°C, is particularly problematic on long haul flights of 5-7 hours or longer. Even if the galley containers and their content are cool upon loading of the galley containers onboard of the aircraft, the interior of the galley containers and their contents will usually have reached a temperature above 8°C after a few hours or even less time. Food products that are still within the galley container will have to be disposed of, due to spoilage.

Galley containers have therefore been provided with all sorts of equipment to be able to cool their interior and content for longer periods of time. Active cooling using an active cooling element within the galley container requires electrical power, such as an electrical connection to the aircraft electronic system or a built-in electrical storage, e.g. a battery. Active cooling from outside, for instance by an active cooling element in the galley itself during storage of the galley container, will require a cooling system connected to the electronic system of the aircraft.

The above-mentioned active cooling methods have the disadvantage that electricity is needed for the cooling element to cool the galley container and its contents. In situations where electricity is not available, for instance if the aircraft's electrical system is shut down, or is defective, or if the battery is empty, cooling will not be possible and the temperature of the food product will rise, causing spoilage of the food products.

Another method of cooling a galley container is the use of passive cooling, i.e. cooling without the need of electricity. The passive refrigeration and preservation at serving temperature of food products and beverages transported in in-flight galley containers generally takes place by means of carbon dioxide ice, or dry ice, in a sheet or pellet form. As a refrigerant, carbon dioxide ice is very effective, but is often an uneven substance that rapidly chills products and rapidly evaporates. At present, passive cooling of this type is used primarily during logistical transport of the galley container to the aircraft. Due to the inability of existing systems to maintain their temperature for a long period, such systems are not generally suitable for maintaining a low temperature during a long-haul flight. Galley containers that employ passive cooling are disclosed in US2011/0248458 and in WO2006/093410. These containers are arranged to allow cold air produced in a dry-ice tray to propagate from the tray into the interior of the container where the food is stored. A delivery container for temperature sensitive goods that includes a partially insulated refrigerant support tray is disclosed in WO2013/024448.

International patent document WO2012/056086 describes a refrigerator unit for an aircraft comprising a casing manufactured from aluminium and foamed polypropylene to which an aluminium L-shaped plate acting as a thermal conductor is attached. The casing insulates dry ice and is covered by one leg of the L-shaped plate. As the casing and the L-shaped plate are slid into a galley container, the second leg of the L-shaped plate acts as a refrigerating part to the rear and the lower parts of the galley container.

A disadvantage of the above-described refrigerator unit is that the refrigerating part of the L-shaped plate forms an extra separation within the interior of the galley container. Usually a galley container can be accessed in its full length from both the rear and the front side such that the galley container does not have to be fully turned in the limited space available in planes to be able to reach all of the interior. By inserting a refrigerator unit according to the prior art, either the front or rear side access openings are blocked by the refrigerating part of the L-shaped part. Furthermore, if the refrigerating part is located halfway the length of the galley container, the passage of trays from front to back or vice versa is blocked.

Additionally, the above described passive refrigerator unit, but also any active cooling element, will take up valuable space within the galley container, leaving less space for food products or any other contents of the galley container. A refrigerator unit that combines a relatively small volume with passive cooling of the interior of the galley container would be desired. Still further, because of its position within the interior of the galley container, the refrigerator unit must be inserted into the container before the container is sealed, which may occur long before the container is loaded onto the airplane.

The trolley with passive cooling described in WO2006/093410A1 includes a top wall arranged between a cooling compartment for dry ice and the interior of the trolley body. This top wall includes through holes through which evaporated CO₂ gas from the compartment can flow into the interior, driven by thermal convection.

It would be desirable to provide an alternative way to passively control cooling of food product and/or the interior of a galley container that alleviates at least some of the perceived inconveniences of the prior art.

### Summary of the invention

According to a first aspect of the invention, there is provided a galley container for an aircraft as specified in any one of claims 1 to 15.

In a second aspect of the invention, there is provided an assembly according to claim 16.

### Brief description of the drawings

An illustrative example of an assembly of an insulated galley container not part of the present invention, and a cooling element and an embodiment of the galley container, will by way of non-limiting examples be described in detail with reference to the accompanying drawings. In the drawings:
Figure 1 shows a schematic, perspective view of an illustrative example of an assembly of a galley container and a cooling element.
Figure 2a shows a vertical longitudinal cross-section view of the assembly of Fig. 1 along line II-II.
Figure 2b shows a detail of the top part of the assembly of Fig. 2a.
Figure 3a shows a vertical transversal cross-section view of the assembly of Fig. 1 along line III-III.
Figure 3b shows a detail of the top and bottom part of the assembly of Fig. 3a.
Figure 4a shows a horizontal transversal cross-section view of the assembly of Fig. 1 along line IV-IV in Fig. 2a.
Figure 4b shows a detail of Fig. 4a.
Figure 5 shows a schematic perspective view of an example of the cooling element.
Figure 6 shows a schematic, perspective view of an embodiment of the galley container according to the invention.
Figure 7a shows a vertical transverse cross-section view of the assembly of Fig. 6 along line VII-VII.
Figure 7b shows a detail of the top part of the assembly of Fig. 7a.
Figure 7c shows a detail of the bottom part of the assembly of Fig. 7a.

### Detailed description

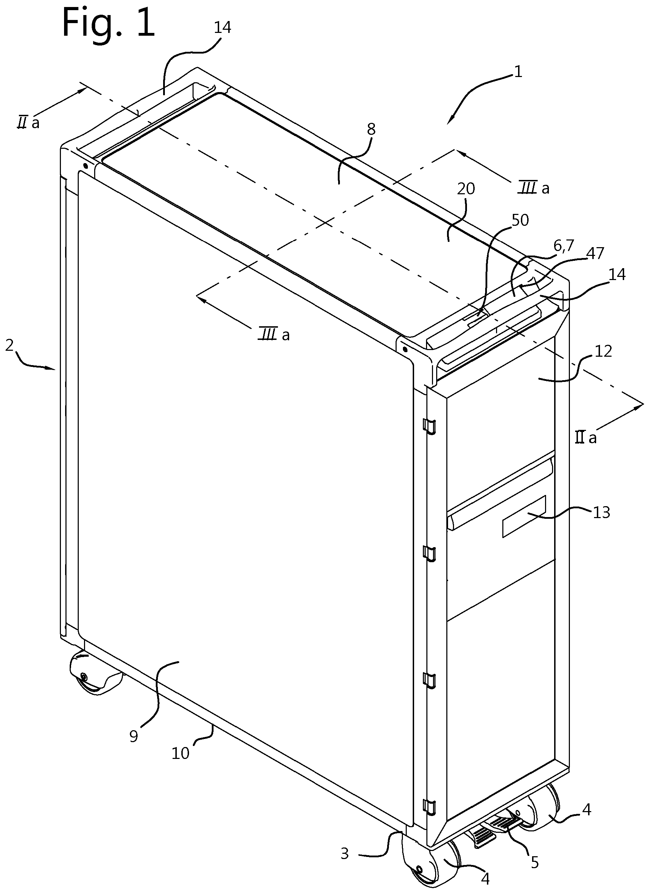

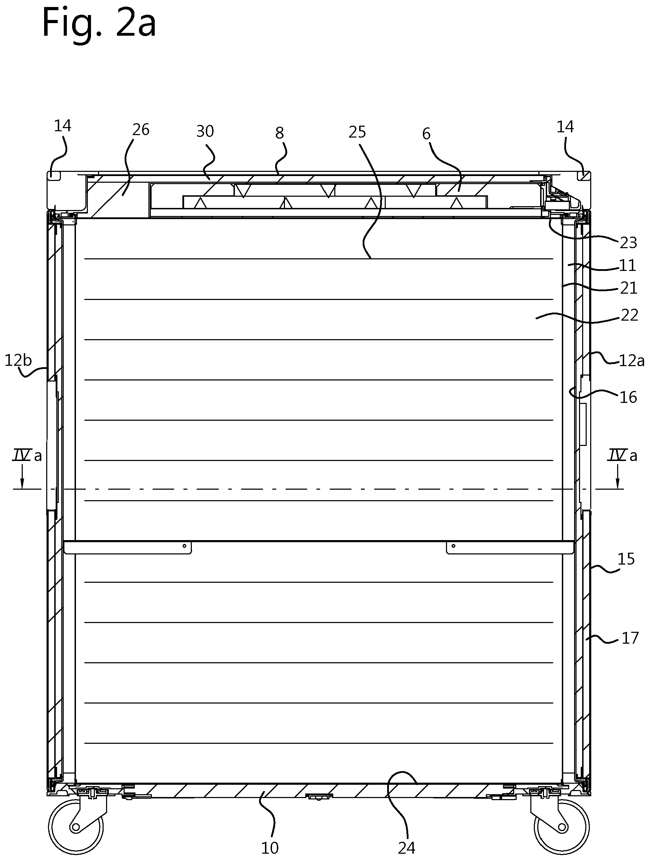

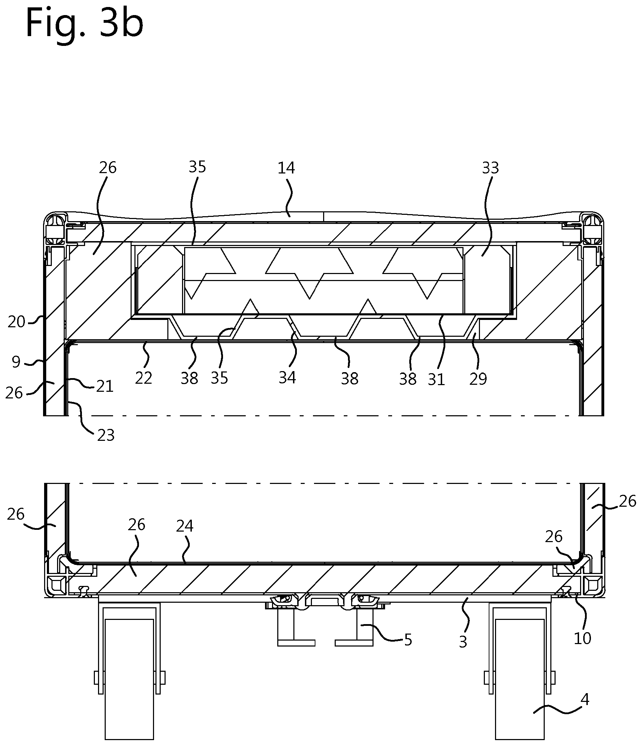

Figure 1 shows a perspective view of an illustrative example of an assembly 1 of a galley container 2 not part of the present invention, in the form of an aircraft trolley with a support base 3 comprising wheels 4 for transport and a locking mechanism 5 to lock the wheels. The assembly 1 further comprises a cooling element 6 with a front side 7 comprising a locking and release element 50 for receipt in and release from the galley container 2 of the cooling element 6 from the receiving portion 29, see Figure 3b. The galley container 2 further comprises a first shell, here outer shell 20, and a second shell, here inner shell 21 (see Figure 2a), both comprising a roof element 8, 22, side walls 9, 23 and a floor element 10, 24. An interior 11 (shown in Fig. 2a) of the galley container 2 can be accessed through door 12, comprising a closure mechanism 13. The door 12 is hingedly connected to a side wall 9 of the galley container 2. The galley container 2 further comprises two handles 14, one at the front side, coinciding with the front side 7 of the cooling element 6, and one at the rear side, opposite the front side. These handles 14 are used to push, pull and steer the galley container 2 during use.

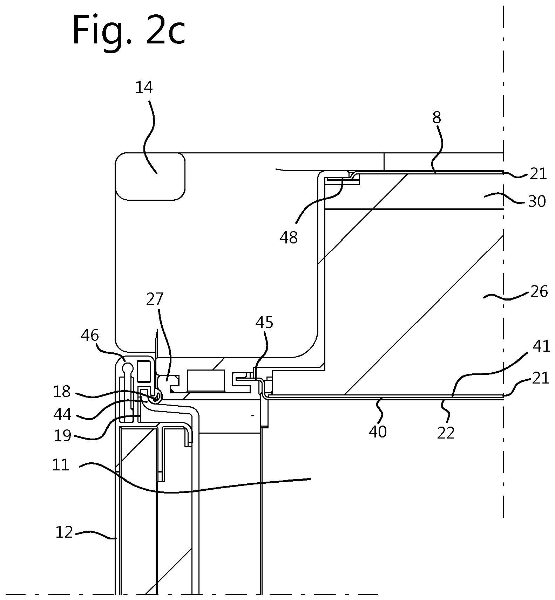

Figure 2a shows a longitudinal cross-section view of the assembly 1 of figure 1 along line II-II. As can be seen, the galley container 2 has a door 12a at the front side and a door 12b at the rear side of the galley container. The door 12 comprises a first panel 15 facing the front side of the galley container 2 and a second panel 16 facing away from the front side of the galley container 2. In between the first and second panels, 15, 16, a thermally insulating layer 17 is provided. Along a peripheral rim of the door 12 a sealing element 18, see Figure 2c, is provided between the front panel 15 and rear panel 16 of the door 12. The sealing element 18 is combined with a thermally insulating element 19 to prevent thermal bridges between the front panel 15 and the rear panel 16 of the door 12 and between the interior 11 and the exterior of the galley container 2, see Figure 2c.

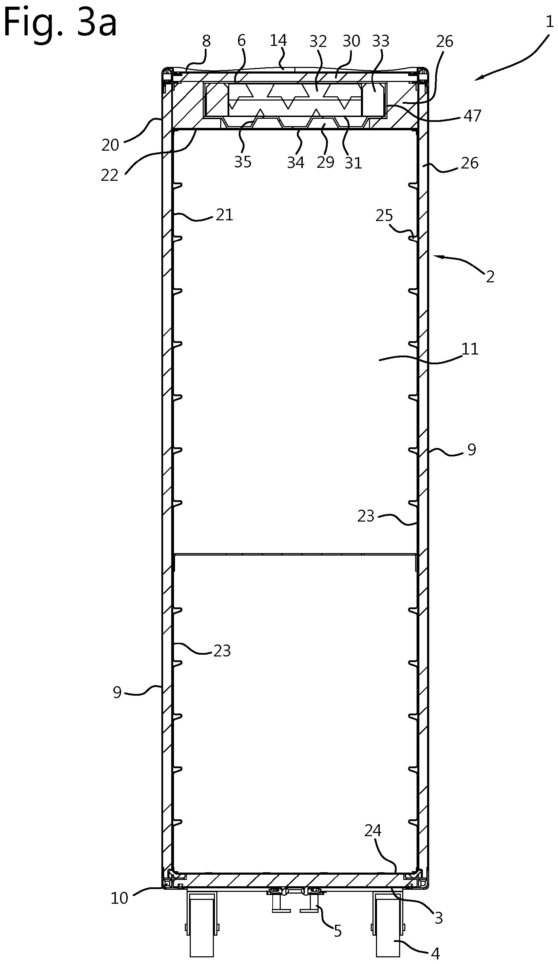

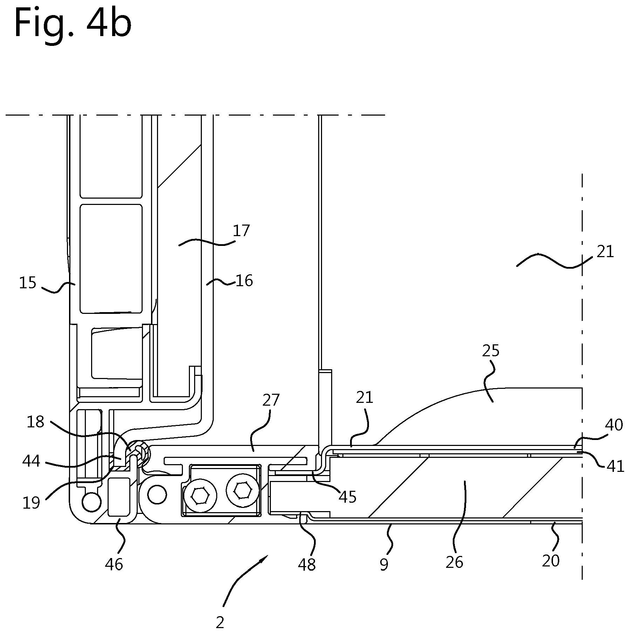

Within the first shell 20, a second shell 21 is provided. Between the first and second shell, a thermally insulating layer 26 (see Figure 3a) is provided. A connection element 27 between first shell 20 and second shell 21 comprises a thermally insulating material such that thermal bridges between the first and second shells are prevented. The connection element 27 is provided along the peripheral rim 48 of the first shell 20 and the peripheral rim 45 of the second shell 21, see Figs. 2c and 4b.

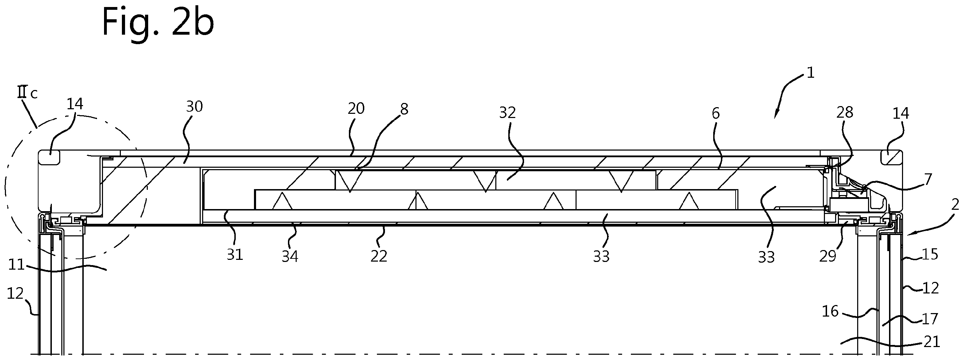

The galley container 2 further has a receiving portion 29 situated between the roof element 22 of the inner second shell 21 and the roof element 8 of the outer first shell 20, shown in more detail in Fig. 2b. Within the receiving portion 29 the cooling element 6 is received. Between the roof elements, the thermally insulating layer 26 is present. The cooling element 6 is surrounded by this thermally insulating layer 26 present between the inner and outer shell to thermally separate the two shells. In addition, the thermally insulating layer 26 between the roof elements thermally insulates the cooling element 6 from the exterior heat. The thermal insulating layer 26 comprises a thermally insulating layer portion 30 provided against an interior side of the ceiling part 8 of the outer shell 20. The thermally insulating layer 26 can comprise any material with a lower thermal conductivity than metal, such as a polymer material. Examples of thermally insulating material are expanded polystyrene (EPS), expanded polypropylene (EPP), an aerogel or a vacuum insulated panel (VIP).

Within the cooling element 6, a container 31 for containing the coolant 32, for instance blocks of dry ice, is provided. The container 31 further holds thermally insulating element 33 that surrounds the coolant 32 at four sides. The thermally insulating element 33 insulates the coolant from the surroundings of the cooling element 6 and thereby adds to the control of the dry ice dissipation rate. Additionally, the insulating material defines the space available for the coolant 32. In case a larger volume of coolant 32 is required, the amount of insulating material 33 can be reduced or even omitted if necessary.

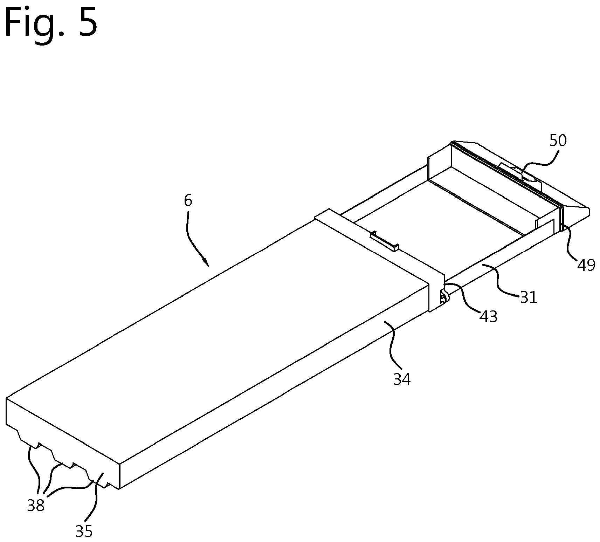

Figure 3a shows a vertical transversal cross-section view of the assembly of figure 1 along line III-III and Figure 3b shows a detail of the top and bottom part of the assembly of Fig. 3a. The cooling element 6 is received within the receiving portion 29 between the parts of the thermally insulating layer 26 between the roof elements 8, 22 of the first and second shells 20, 21, respectively. The receiving portion 29 can be accessed through an access opening 28 between the roof elements 8, 22 of the first and second shells 20, 21, respectively, the access opening 28 having a peripheral rim 47. The peripheral rim 47 of the access opening 28 can be provided with a sealant (not shown) to seal the access opening 28 when the cooling element 6 is situated within the receiving portion 29. The cooling element 6 comprises a container 31 for containing the coolant 32, and a heat transfer element 35 to transfer heat between the container 31 and an outside of the cooling element along at least part of the container 31 and the outside of the cooling element 6. The container 31 is received within a housing 34 as a drawer sliding within the housing 34 enclosing the container 31, see Figure 5. To prevent leakage of exterior air to the coolant, a sealant 49 is provided between a peripheral rim 43 of the housing 34 and the front side 7 of the container 31. The heat transfer element 35 is formed by a corrugated plate forming the base of the housing, wherein corrugations 38 are alternately tangential to an outside of the container 31 or to an outside of the second shell 21, thereby establishing a thermal bridge between the base of the housing 34, the base of the container 31 and the second shell 21. In addition, a thermal insulating material can be provided within at least some of the respective corrugations to adjust the heat transfer rate between the cooling element 6 and the second shell 21.

During use as a galley trolley or container on board of an airplane, trays (not shown) will be stored within the interior 11 of the galley container 2. The trays are then supported on tray supports 25 that are provided at or on an inside of the second shell 21. Figure 3a shows tray supports 25 that protrude outwardly from the inside of the second shell 21. However, tray supports that protrude inwardly from the inside of the second shell 21, i.e. protrude inside the thermally insulating layer 26, would be possible as well. An advantage of this arrangement is that the thickness of the thermally insulating layer 26 between the side walls 9, 23 of the first and second shells 20, 21, respectively, can be increased, obtaining an increased insulation of the galley container.

Fig. 3b shows that the second shell 21 comprises two layers of material, preferably being aluminium. Any other materials with good heat conductivity, preferably combined with a good strength to weight ratio, could be used as well. Additionally, the inner and outer layer could be of distinct materials. Furthermore, two or more material could be combined within at least one of the layers as well. The two layers increase the strength of the second shell 21, necessary to be able to support the trays during use. The inner layer 40 of the inner shell 21 is provided with the outwardly protruding tray supports 25, whereas the outer layer 41 of the inner shell 21 provides additional strength to the inner shell 21, see Figure 4b. However, it is possible to manufacture the inner shell of only one layer or more than two layers as well.

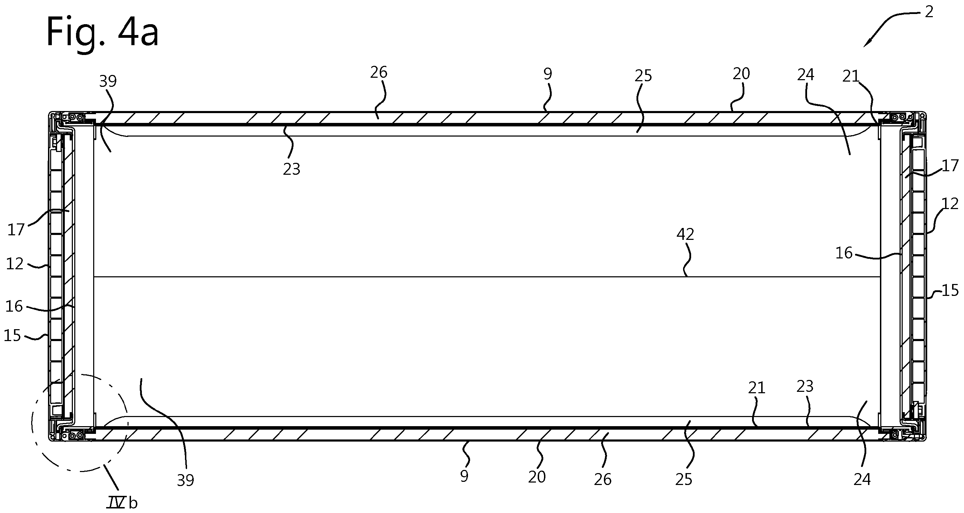

Figure 4a shows a horizontal transversal cross-section view of the assembly 1 of figure 1 along line IV-IV in Fig. 2a. Inner shell 21 can be manufactured as an integral unit, but it is also possible to manufacture inner shell parts 39 and then assemble these parts 39 to form the inner shell 21. The inner shell parts 39 are connected along connection line 42.

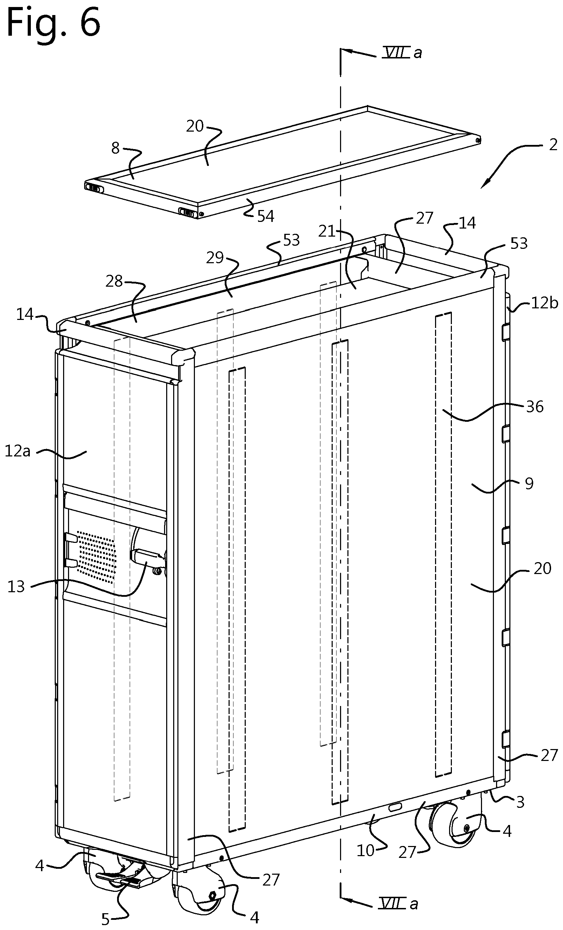

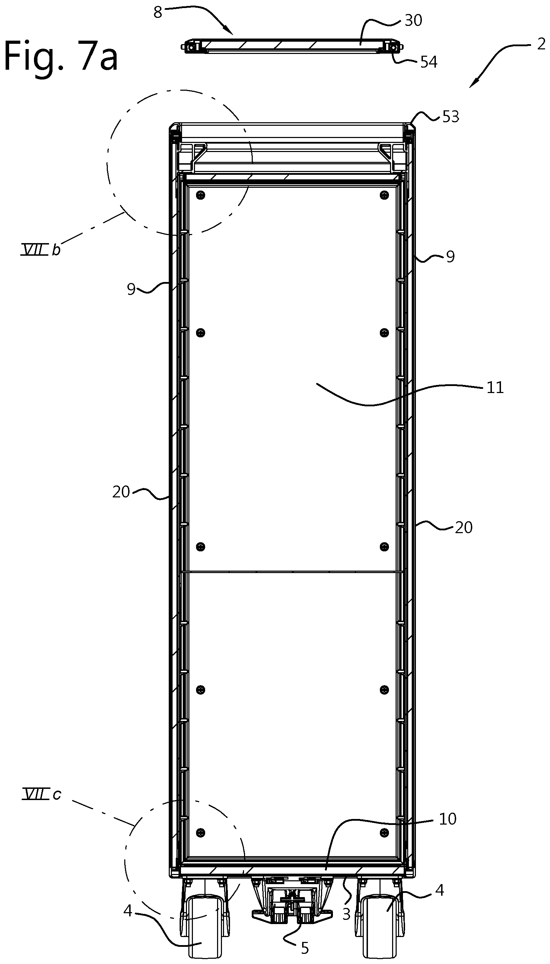

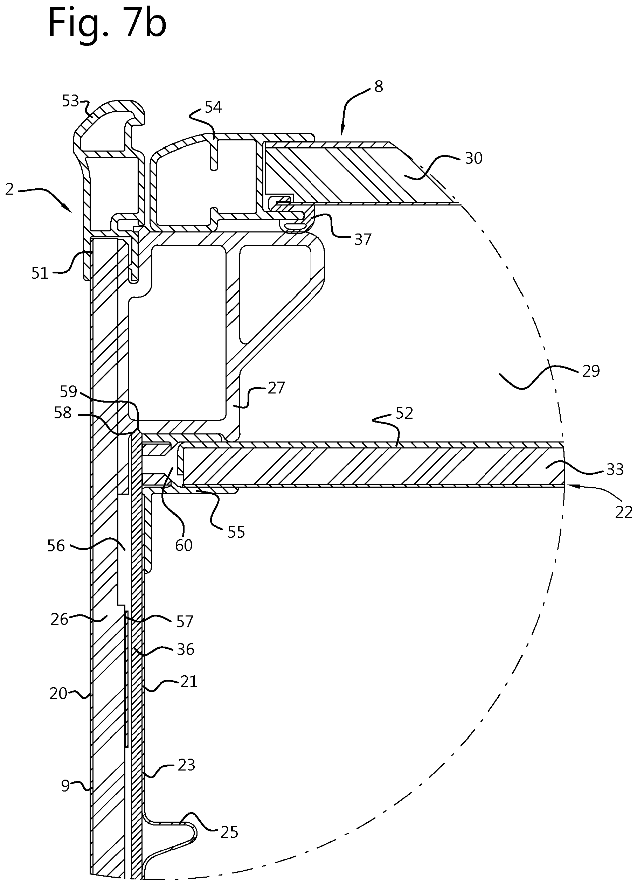

Figure 6 shows a schematic, perspective view of an embodiment of the galley container 2 in the form of an aircraft trolley with a support base 3 comprising wheels 4 for transport and a locking mechanism 5 to lock the wheels. The galley container 2 further comprises a first shell, here outer shell 20, and a second shell, here inner shell 21 (see Figures 7a-c), both comprising a roof element 8, 22, side walls 9, 23 and a floor element 10, 24. An interior 11 (shown in Figs. 7a-c) of the galley container 2 can be accessed through door 12, comprising a closure mechanism 13. The door 12 is hingedly connected to a side wall 9 of the galley container 2. The galley container 2 further comprises two handles 14, one at the front side, and one at the rear side, opposite the front side. These handles 14 are used to push, pull and steer the galley container 2 during use. The roof element 8 of the outer shell 20 is formed as a lid part that is used to close the access opening 28 provided in the roof part of the galley container, of a receiving portion 29 (see fig. 7b) and is shown separate from the galley container in figs. 6 and 7a.

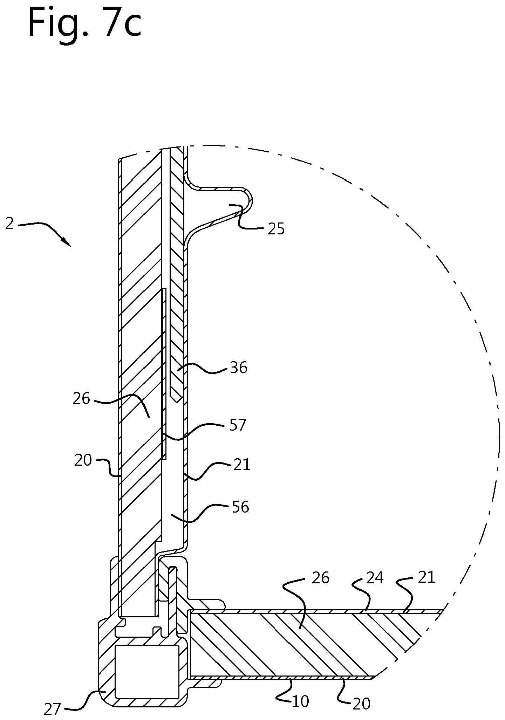

Figure 7a shows a vertical transversal cross-section view of the assembly of fig. 6 along line VII-VII, Figures 7b and c show a detail of the top and bottom part of the galley container of Fig. 7a, respectively. Within the first shell 20, a second shell 21 is provided. Between the first and second shell, a thermally insulating layer 26 (see figs. 7b and c) is provided. A connection element 27 between first shell 20 and second shell 21 comprises a thermally insulating material such that thermal bridges between the first and second shell are prevented.

The galley container 2 further has a receiving portion 29 situated between the roof element 22 of the inner second shell 21 and the roof element 8 of the outer first shell 20, shown in more detail in Fig. 7b. A thermally insulating separating wall 33 is provided between the receiving portion 29 and the roof element 22. A coolant can be received within the receiving portion 29 between the parts of the thermally insulating layer 26 between the roof elements 8, 22 of the first and second shells 20, 21, respectively. The coolant can be contained within a cooling container, such as the cooling element described above, or can be the cooling material itself. The coolant may be dry ice, i.e. solid carbon dioxide, having a temperature of about -80°C. However, other coolants with comparable properties as dry ice may be used as well. The heat transfer device 35 is formed by heat transfer plate 52 that is in thermal connection with heat pipes 36 by means of a heat transfer connection element 55. The heat transfer plate 52 is connected to the heat transfer connection element 55 by means of a thermally conducting element, such as a metal screw 60. The heat pipes 36 transport the heat from the interior 11 of the galley container 2 via element 55 and heat transfer plate 52 to the coolant in the receiving space 29. The heat causes evaporation of the dry ice coolant, such that the heat energy is extracted from the interior 11 of the galley container 2 that is as such cooled or at least kept at a desired temperature. The preferred material of the heat transfer elements 52, 55, 60 is aluminium or another material with similar light weight and heat conducting properties.

The heat pipe 36 is provided in a cavity 56 between the inner shell 21 and the thermally insulating layer 26. Spacers 57 are used to separate the heat pipes 36 from the thermally insulating layer 26. Additionally, a free end 58 of the heat pipe 36 is engaged by a recess 59 within the insulating connection element 27 that is provided along the periphery of the access opening 28. The connection element 27 prevents the formation of thermal bridges between the outer shell and the inner shell and/or the heat pipes by means of a thermally insulating connection. The heat pipe 36 extends from an underside of the connection element 27 towards the bottom part of the galley container (see fig. 7c). A number of heat pipes 36 can be provided in the cavity 56, depending on the amount of cooling needed. The heat pipes 36 can be evenly distributed or can be concentrated around one location. The heat pipes 36 are positioned in both side walls of the galley container 2, in symmetrical way, i.e. the distribution in a longitudinal direction in both side walls is similar such that a heat pipe in one side wall is opposite a heat pipe in the other side wall. In the illustrated embodiment, heat pipes are shown but it will be understood that other forms of thermally conductive connections may be applied in a similar manner to collect heat from the sidewalls 23.

The receiving portion 29 is closed by means of roof element 8 that is formed as a lid part of the top part of the galley container 2. The lid part is provided with a peripheral supporting rim part 54 that bears on the thermally insulating element 27. A sealing element 37 is provided along the periphery of the roof element 8 that seals the receiving portion 29 from the exterior of the galley container 2.

Fig. 7b furthermore shows a peripheral edge part 53 that is connected to an upper peripheral rim or edge 51 of the first shell 20 and the connection element 27. The edge part 53 protects the upper peripheral edge 51 against damage by bumping or sliding against a wall or other object.

Fig. 7c shows a detail of the bottom part of the galley container 2. It is shown that the side walls 9, 23 of the first and second shell, respectively, and the floor elements 10, 24 of the first and second shell, respectively, are connected by means of a connection element 27 that provides a thermally insulating connection between the respective side walls and floor elements, such that thermal bridges between the first and second shell and between the side walls and floor elements are prevented.

**LIST OF PARTS**

| | |
|---|---|
| 1. Assembly | 32. Coolant |
| 2. Galley container | 33. Thermally insulating element |
| 3. Support base | 34. Housing |
| 4. Wheels | 35. Heat transfer element |
| 5. Locking mechanism | 36. Heat pipe |
| 6. Cooling element | 37. Sealing element |
| 7. Front side of cooling element | 38. Corrugation |
| 8. Roof element of first shell | 39. Second shell part |
| 9. Side wall of first shell | 40. Inner layer of second shell |
| 10. Floor element of first shell | 41. Outer layer of second shell |
| 11. Interior of galley container | 42. Connection line of second shell |
| 12a + b. Door | 43. Peripheral rim of housing |
| 13. Closure mechanism | 44. Peripheral rim of second panel |
| 14. Handle | 45. Peripheral rim of second shell |
| 15. First panel of door | 46. Peripheral rim of first panel |
| 16. Second panel of door | 47. Peripheral rim of access opening |
| 17. Thermally insulating layer | 48. Peripheral rim of first shell |
| 18. Sealing element | 49. Sealant |
| 19. Thermally insulating element | 50. Locking and release element. |
| 20. First / outer shell | 51. Upper peripheral edge |
| 21. Second / inner shell | 52. Heat transfer plate |
| 22. Roof element of second shell | 53. Peripheral edge part |
| 23. Side wall of second shell | 54. Peripheral supporting rim part |
| 24. Floor element of second shell | 55. Heat transfer connection element |
| 25. Tray support element | 56. Cavity |
| 26. Thermally insulating layer | 57. Spacer |
| 27. Connection element | 58. Free end of heat pipe |
| 28. Access opening | 59. Recess |
| 29. Receiving portion | 60. Screw |
| 30. Thermally insulating layer portion | |
| 31. Container | |

## Claims

1. Galley container (2) for an aircraft, comprising
- a first shell (20) having a peripheral rim (48) defining an opening for access to an interior (11) of the galley container;
- a second shell (21) within the first shell, having a further peripheral rim (45), the second shell being formed of a material of high thermal conductivity, wherein the second shell encloses the interior of the galley container;
wherein each shell comprises a roof element (8, 22), a floor element (10, 24) and at least two sidewalls (9, 23), the galley container further comprising:
- a thermally insulating layer (26, 30), thermally insulating the second shell from an exterior of the galley container;
- a receiving portion (29) located above the roof element (22) of the second shell for receiving a cooling element (6) or a coolant (32), which receiving portion is provided within the first shell and is thermally insulated from the exterior of the galley container and partially thermally insulated from the second shell,
- a separating wall (33) arranged between the receiving portion (29) and the roof element (22) of the second shell (21);
- a heat transfer device (52, 55, 36), extending along the roof element (22) of the second shell, and from the roof element (22) towards the floor element (24) of the second shell along the interior (11) of the galley container (2) over at least a surface of the sidewalls (23) of the second shell, such that heat from the interior (11) of the galley container (2) is transferrable by thermal conduction, via the sidewalls and the heat transfer device, to the receiving portion (29); and
- at least one door (12) provided at the opening to close the galley container in a closed position of the door;
**characterized in that** the separating wall (33) forms an insulating layer that thermally insulates the roof element (22) over its entire surface, the wall being hermetic so as to prevent passage of air between the interior of the second shell and the receiving portion, and so that heat transfer from the interior (11) to the receiving portion (29) takes place primarily by the thermal conduction via the sidewalls (23).

2. Galley container (2) according to claim 1, wherein the heat transfer device (52, 55, 36) is provided between the thermally insulating layer (26) and the second shell (21), wherein the heat transfer device is adjacent to the second shell.

3. Galley container (2) according to any of the preceding claims, wherein the receiving portion (29) is provided between the first shell (20) and the second shell (21).

4. Galley container (2) according to claim 3, wherein the receiving portion is provided between a roof element (8) of the first shell and a roof element (22) of the second shell.

5. Galley container (2) according to any of the preceding claims, wherein the at least one door (12, 12') comprises
- a first panel (15) facing outwards;
- a second panel (16) facing the interior of the galley container; and
- a thermally insulating layer (17) between the first panel and the second panel to thermally separating the first and second panel and limit heat transfer between the interior of the galley container and the exterior of the galley container when the door is in the closed position.

6. Galley container (2) according to claim 5, wherein the second panel comprises a thermally insulating element (19) along at least a peripheral rim (44) of the second panel to prevent thermal bridges between the interior of the galley container and the exterior of the galley container through abutment of the second panel with the peripheral rim of the second shell when the door is in the closed position.

7. Galley container (2) according to claim 5 or 6, wherein a further thermally insulating element (43) is provided between the peripheral rim of the second panel and a further peripheral rim (46) of the first panel to prevent thermal bridges between the first and second panels.

8. Galley container (2) according to any of claims 6 to 7, wherein at least the second panel of the door is provided with a sealant (18) along the peripheral rim to prevent outside air entering the interior of the galley container when the door is in the closed position.

9. Galley container (2) according to any of the preceding claims, wherein the receiving portion is accessible from an exterior of the galley container.

10. Galley container (2) according to any of the preceding claims, wherein the first shell is provided with an access opening (28) to access the receiving portion, wherein the cooling element or coolant is receivable in the receiving portion through the access opening.

11. Galley container (2) according to claim 10, wherein the access opening is provided with a closing lid to close the access opening.

12. Galley container (2) according to claim 10 or 11, wherein the access opening is provided in the roof element of the first shell.

13. Galley container (2) according to claim 10 or 12, wherein the access opening is provided in at least one of a front side and a rear side of the galley container.

14. Galley container (2) according to any of claims 10-13, wherein between a peripheral rim (47) of the access opening and the cooling element a sealing element (49) is provided to prevent leakage to the exterior of the first shell after insertion of the cooling element.

15. Galley container (2) according to any of the preceding claims, wherein an inside of the second shell is provided with a further thermally insulating layer.

16. Assembly (1) of a galley container (2) according to any of the claims 1-15 and a cooling element (6), wherein the cooling element is receivable within the receiving portion (29) of the galley container, such that a heat transfer element (35) of the cooling element and the second shell (21) are connected to each other, thereby establishing a thermal connection between the cooling element and the second shell, such that heat is transferrable between the cooling element and an interior of the galley container (11) via the second shell.

## Patentansprüche

1. Bordküchenbehälter (2) für ein Flugzeug, umfassend
- eine erste Hülle (20), die einen Umfangsrand (48) aufweist, der eine Öffnung für Zugang zu einem Inneren (11) des Bordküchenbehälters definiert;
- eine zweite Hülle (21) innerhalb der ersten Hülle, die einen weiteren Umfangsrand (45) aufweist, wobei die zweite Hülle aus einem Material mit hoher Wärmeleitfähigkeit gebildet ist, wobei die zweite Hülle das Innere des Bordküchenbehälters umschließt;
wobei jede Hülle ein Deckenelement (8, 22), ein Bodenelement (10, 24) und mindestens zwei Seitenwände (9, 23) umfasst, der Bordküchenbehälter weiter umfassend:
- eine wärmeisolierende Schicht (26, 30), die die zweite Hülle thermisch von einem Äußeren des Bordküchenbehälters isoliert;
- einen Aufnahmeabschnitt (29), der über dem Deckenelement (22) der zweiten Hülle liegt, um ein Kühlelement (6) oder ein Kältemittel (32) aufzunehmen, wobei der Aufnahmeabschnitt innerhalb der ersten Hülle bereitgestellt ist und thermisch von dem Äußeren des Bordküchenbehälters und teilweise thermisch von der zweiten Hülle isoliert ist,
- eine Trennwand (33), die zwischen dem Aufnahmeabschnitt (29) und dem Deckenelement (22) der zweiten Hülle (21) eingerichtet ist;
- eine Wärmeübertragungsvorrichtung (52, 55, 36), die sich entlang des Deckenelements (22) der zweiten Hülle und von dem Deckenelement (22) zu dem Bodenelement (24) der zweiten Hülle entlang des Inneren (11) des Bordküchenbehälters (2) über mindestens eine Oberfläche der Seitenwände (23) der zweiten Hülle erstreckt, sodass Wärme durch Wärmeleitung von dem Inneren (11) des Bordküchenbehälters (2) über die Seitenwände und die Übertragungsvorrichtung an den Aufnahmeabschnitt (29) übertragbar ist; und
- mindestens eine Tür (12), die bei der Öffnung bereitgestellt ist, um den Bordküchenbehälter in einer geschlossenen Position der Tür zu schließen;
**dadurch gekennzeichnet**, das die Trennwand (33) eine isolierende Schicht bildet, die das Deckenelement (22) über seine gesamte Oberfläche isoliert, wobei die Wand hermetisch ist, um Durchdritt von Luft zwischen dem Inneren der zweiten Hülle und dem Aufnahmeabschnitt zu verhindern und damit Wärmeübertragung von dem Inneren (11) zu dem Aufnahmeabschnitt (29) vorrangig durch die Wärmeleitung über die Seitenwände (23) stattfindet.

2. Bordküchenbehälter (2) nach Anspruch 1, wobei die Wärmeübertragungsvorrichtung (52, 55, 36) zwischen der wärmeisolierenden Schicht (26) und der zweiten Hülle (21) bereitgestellt ist, wobei die Wärmeübertragungsvorrichtung an die zweite Hülle angrenzt.

3. Bordküchenbehälter (2) nach einem der vorstehenden Ansprüche, wobei der Aufnahmeabschnitt (29) zwischen der ersten Hülle (20) und der zweiten Hülle (21) bereitgestellt ist.

4. Bordküchenbehälter (2) nach Anspruch 3, wobei der Aufnahmeabschnitt zwischen einem Deckenelement (8) der ersten Hülle und einem Deckenelement (22) der zweiten Hülle bereitgestellt ist.

5. Bordküchenbehälter (2) nach einem der vorstehenden Ansprüche, wobei die mindestens eine Tür (12, 12') umfasst
- eine erste Platte (15), die nach außen zeigt;
- eine zweite Platte (16), die zu dem Inneren des Bordküchenbehälters zeigt; und
- eine wärmeisolierende Schicht (17) zwischen der ersten Platte und der zweiten Platte, um die erste und die zweite Platte thermisch zu trennen und Wärmeübertragung zwischen dem Inneren des Bordküchenbehälters und dem Äußeren des Bordküchenbehälters zu begrenzen, wenn die Tür in der geschlossenen Position ist.

6. Bordküchenbehälter (2) nach Anspruch 5, wobei die zweite Platte ein wärmeisolierendes Element (19) entlang mindestens eines Umfangsrands (44) der zweiten Platte umfasst, um Wärmebrücken zwischen dem Inneren des Bordküchenbehälters und dem Äußeren des Bordküchenbehälters durch Anliegen der zweiten Platte an dem Umfangsrand der zweiten Hülle zu verhindern, wenn die Tür in der geschlossenen Position ist.

7. Bordküchenbehälter (2) nach Anspruch 5 oder 6, wobei ein weiteres wärmeisolierendes Element (43) zwischen dem Umfangsrand der zweiten Platte und einem weiteren Umfangsrand (46) der ersten Platte bereitgestellt ist, um Wärmebrücken zwischen der ersten und er zweiten Platte zu verhindern.

8. Bordküchenbehälter (2) nach einem der Ansprüche 6 bis 7, wobei mindestens die zweite Platte der Tür mit einer Dichtung (18) entlang des Umfangsrands bereitgestellt ist, um Außenluft daran zu hindern, in das Innere des Bordküchenbehälters zu gelangen, wenn die Tür in der geschlossenen Position ist.

9. Bordküchenbehälter (2) nach einem der vorstehenden Ansprüche, wobei der Aufnahmeabschnitt von einem Äußeren des Bordküchenbehälters zugänglich ist.

10. Bordküchenbehälter (2) nach einem der vorstehenden Ansprüche, wobei die erste Hülle mit einer Zugangsöffnung (28) bereitgestellt ist, um auf den Aufnahmeabschnitt zuzugreifen, wobei das Kühlelement oder Kältemittel in dem Aufnahmeabschnitt durch die Zugangsöffnung aufnehmbar ist.

11. Bordküchenbehälter (2) nach Anspruch 10, wobei die Zugangsöffnung mit einem Verschlussdeckel bereitgestellt ist, um die Zugangsöffnung zu schließen.

12. Bordküchenbehälter (2) nach Anspruch 10 oder 11, wobei die Zugangsöffnung in dem Deckenelement der ersten Hülle bereitgestellt ist.

13. Bordküchenbehälter (2) nach Anspruch 10 oder 12, wobei die Zugangsöffnung in mindestens einer von einer Vorderseite und einer Rückseite des Bordküchenbehälters bereitgestellt ist.

14. Bordküchenbehälter (2) nach einem der Ansprüche 10-13, wobei zwischen einem Umfangsrand (47) der Zugangsöffnung und dem Kühlelement ein Dichtungselement (49) bereitgestellt ist, um Austritt zu dem Äußeren der ersten Hülle nach Einsatz des Kühlelements zu verhindern.

15. Bordküchenbehälter (2) nach einem der vorstehenden Ansprüche, wobei ein Inneres der zweiten Hülle mit einer weiteren wärmeisolierenden Schicht bereitgestellt ist.

16. Anordnung (1) eines Bordküchenbehälters (2) nach einem der Ansprüche 1-15 und eines Kühlelements (6), wobei das Kühlelement innerhalb des Aufnahmeabschnitts (29) des Bordküchenbehälters aufnehmbar ist, sodass ein Wärmeübertragungselement (35) des Kühlelements und der zweiten Hülle (21) miteinander verbunden sind, wodurch ein Wärmeanschluss zwischen dem Kühlelement und der zweiten Hülle hergestellt wird, sodass Wärme zwischen dem Kühlelement und einem Inneren des Bordküchenbehälters (11) über die zweite Hülle übertragbar ist.

## Revendications

1. Conteneur d'office (2) destiné à un aéronef, comprenant
- une première coque (20) présentant un rebord périphérique (48) définissant une ouverture pour accéder à un intérieur (11) du conteneur d'office ;
- une seconde coque (21) à l'intérieur de la première coque, présentant un rebord périphérique supplémentaire (45), la seconde coque étant formée d'un matériau à haute conductivité thermique, dans lequel la seconde coque entoure l'intérieur du conteneur d'office ;
dans lequel chaque coque comprend un élément de toit (8, 22), un élément de plancher (10, 24) et au moins deux parois latérales (9, 23), le conteneur d'office comprenant en outre :
- une couche d'isolation thermique (26, 30), isolant thermiquement la seconde coque d'un extérieur du conteneur d'office ;
- une partie de réception (29) située au-dessus de l'élément de toit (22) de la seconde coque pour recevoir un élément de refroidissement (6) ou un réfrigérant (32), laquelle partie de réception est prévue à l'intérieur de la première coque et est isolée thermiquement de l'extérieur du conteneur d'office et partiellement isolée thermiquement de la seconde coque,
- une paroi de séparation (33) agencée entre la partie de réception (29) et l'élément de toit (22) de la seconde coque (21) ;
- un dispositif de transfert de chaleur (52, 55, 36), s'étendant le long de l'élément de toit (22) de la seconde coque, et à partir de l'élément de toit (22) vers l'élément de plancher (24) de la seconde coque le long de l'intérieur (11) du conteneur d'office (2) sur au moins une surface des parois latérales (23) de la seconde coque, de sorte que de la chaleur provenant de l'intérieur (11) du conteneur d'office (2) peut être transférée par conduction thermique, via les parois latérales et le dispositif de transfert de chaleur, à la partie de réception (29) ; et
- au moins une porte (12) prévue au niveau de l'ouverture pour fermer le conteneur d'office dans une position fermée de la porte ;
**caractérisé en ce que** la paroi de séparation (33) forme une couche isolante qui isole thermiquement l'élément de toit (22) sur toute sa surface, la paroi étant hermétique de manière à empêcher un passage d'air entre l'intérieur de la seconde coque et la partie de réception, et de sorte qu'un transfert de chaleur à partir de l'intérieur (11) vers la partie de réception (29) intervient principalement par la conduction thermique via les parois latérales (23).

2. Conteneur d'office (2) selon la revendication 1, dans lequel le dispositif de transfert de chaleur (52, 55, 36) est prévu entre la couche d'isolation thermique (26) et la seconde coque (21), dans lequel le dispositif de transfert de chaleur est adjacent à la seconde coque.

3. Conteneur d'office (2) selon l'une quelconque des revendications précédentes, dans lequel la partie de réception (29) est prévue entre la première coque (20) et la seconde coque (21).

4. Conteneur d'office (2) selon la revendication 3, dans lequel la partie de réception est prévue entre un élément de toit (8) de la première coque et un élément de toit (22) de la seconde coque.

5. Conteneur d'office (2) selon l'une quelconque des revendications précédentes, dans lequel ladite au moins une porte (12, 12') comprend
- un premier panneau (15) orienté vers l'extérieur ;
- un second panneau (16) orienté vers l'intérieur du conteneur d'office ; et
- une couche d'isolation thermique (17) entre le premier panneau et le second panneau pour séparer thermiquement les premier et second panneaux et limiter un transfert de chaleur entre l'intérieur du conteneur d'office et l'extérieur du conteneur d'office lorsque la porte est dans la position fermée.

6. Conteneur d'office (2) selon la revendication 5, dans lequel le second panneau comprend un élément d'isolation thermique (19) le long d'au moins un rebord périphérique (44) du second panneau pour empêcher des ponts thermiques entre l'intérieur du conteneur d'office et l'extérieur du conteneur d'office par mise en butée du second panneau avec le rebord périphérique de la seconde coque lorsque la porte est dans la position fermée.

7. Conteneur d'office (2) selon la revendication 5 ou 6, dans lequel un élément d'isolation thermique supplémentaire (43) est prévu entre le rebord périphérique du second panneau et un rebord périphérique supplémentaire (46) du premier panneau pour empêcher des ponts thermiques entre les premier et second panneaux.

8. Conteneur d'office (2) selon l'une quelconque des revendications 6 à 7, dans lequel au moins le second panneau de la porte est pourvu d'un agent d'étanchéité (18) le long du rebord périphérique pour empêcher de l'air extérieur d'entrer à l'intérieur du conteneur d'office lorsque la porte est dans la position fermée.

9. Conteneur d'office (2) selon l'une quelconque des revendications précédentes, dans lequel la partie de réception est accessible depuis un extérieur du conteneur d'office.

10. Conteneur d'office (2) selon l'une quelconque des revendications précédentes, dans lequel la première coque est pourvue d'une ouverture d'accès (28) pour accéder à la partie de réception, dans lequel l'élément de refroidissement ou le réfrigérant peut être reçu dans la partie de réception à travers l'ouverture d'accès.

11. Conteneur d'office (2) selon la revendication 10, dans lequel l'ouverture d'accès est pourvue d'un couvercle de fermeture pour fermer l'ouverture d'accès.

12. Conteneur d'office (2) selon la revendication 10 ou 11, dans lequel l'ouverture d'accès est prévue dans l'élément de toit de la première coque.

13. Conteneur d'office (2) selon la revendication 10 ou 12, dans lequel l'ouverture d'accès est prévue dans au moins l'un d'un côté avant et d'un côté arrière du conteneur d'office.

14. Conteneur d'office (2) selon l'une quelconque des revendications 10-13, dans lequel, entre un rebord périphérique (47) de l'ouverture d'accès et l'élément de refroidissement, un élément d'étanchéité (49) est prévu pour empêcher une fuite vers l'extérieur de la première coque après insertion de l'élément de refroidissement.

15. Conteneur d'office (2) selon l'une quelconque des revendications précédentes, dans lequel un intérieur de la seconde coque est pourvu d'une couche d'isolation thermique supplémentaire.

16. Ensemble (1) d'un conteneur d'office (2) selon l'une quelconque des revendications 1-15 et d'un élément de refroidissement (6), dans lequel l'élément de refroidissement peut être reçu à l'intérieur de la partie de réception (29) du conteneur d'office, de sorte qu'un élément de transfert de chaleur (35) de l'élément de refroidissement et la seconde coque (21) sont connectés l'un à l'autre, en établissant ainsi une connexion thermique entre l'élément de refroidissement et la seconde coque, de sorte que de la chaleur peut être transférée entre l'élément de refroidissement et un intérieur du conteneur d'office (11) via la seconde coque.
